# EUROPEAN PATENT SPECIFICATION

(11) **EP 2 222 070 B1**
(45) Date of publication and mention of the grant of the patent: **12.06.2013**
(21) Application number: 08850097.0
(22) Date of filing: 10.11.2008
(51) Int. Cl.: H04M 1/725, H04W 4/22, H04W 4/06, G08B 27/00, H04W 76/00

(54) **EMERGENCY INFORMATION DISTRIBUTION SYSTEM, EMERGENCY INFORMATION DISTRIBUTION METHOD, TRANSMISSION SERVER, AND MOBILE TERMINAL**
SYSTEM UND VERFAHREN ZUR VERTEILUNG VON NOTFALLINFORMATIONEN, ÜBERTRAGUNGSSERVER UND MOBILES ENDGERÄT
SYSTÈME DE DISTRIBUTION D'INFORMATIONS D'URGENCE, PROCÉDÉ DE DISTRIBUTION D'INFORMATIONS D'URGENCE, SERVEUR DE TRANSMISSION ET TERMINAL MOBILE

(30) Priority: 16.11.2007 JP 2007298524
(43) Date of publication of application: 25.08.2010
(73) Proprietor: NTT DOCOMO, INC., Chiyoda-ku Tokyo 100-6150 (JP)
(72) Inventor: UENO, Hidetoshi c/o NTT DoCoMo Inc. Int.Prop. Dept., Chiyoda-ku, Tokyo 100-6150 (JP); KOKUBO, Takashi c/o NTT DoCoMo Inc. Int.Prop. Dept., Chiyoda-ku, Tokyo 100-6150 (JP); ENDOH, Eisuke c/o NTT DoCoMo Inc. Int.Prop. Dept., Chiyoda-ku, Tokyo 100-6150 (JP); SAKURAMOTO, Hideyuki c/o NTT DoCoMo Inc. Int.Prop. Dept., Chiyoda-ku, Tokyo 100-6150 (JP); OHASHI, Aki c/o NTT DoCoMo Inc. Int.Prop. Dept., Chiyoda-ku, Tokyo 100-6150 (JP)
(74) Representative: HOFFMANN EITLE
(86) International application number: PCT/JP2008/070428
(87) International publication number: WO 2009/063832

(56) References cited:
- JP-A- 8 056 188
- JP-A- 2000 165 925
- JP-A- 2006 331 291
- US-A1- 2006 040 639
- US-A1- 2006 058 005

## Description

### TECHNICAL FIELD

The present invention relates to an emergency information delivery system, an emergency information delivery method, a transmission server, and a mobile terminal for broadcasting a broadcast message including emergency information by using a radio network.

### BACKGROUND ART

There is a demand for measures against disasters such as earthquake, tsunami, typhoon, heavy rain, volcanic eruption, and flooding of a river. In order to respond quickly to a disaster, it is important to notify local residents and other people of disaster information which indicates the occurrence, location, magnitude, state, and the like of the disaster.

A disaster prevention radio system is known as a method for transmitting the disaster information. The disaster prevention radio system is a system built in order that the national and local public organizations can collect and transmit the disaster information. The disaster prevention radio system includes the municipal disaster prevention radio, the administrative radio for prefectural disaster prevention, the fire disaster prevention radio, the central disaster prevention radio, and the like.

The municipal disaster prevention radio, which is the most familiar to local residents, uses for example a broadcast notification method in which the disaster information is notified using outdoor loudspeakers. However, such method is not preferable since the method causes problems such as noise.

Meanwhile, a technique is proposed in which the disaster information is broadcasted to mobile terminals by use of a mobile communication network. CBS (Cell Broadcast Service), MBMS (Multimedia Broadcast/Multicast Service), and the like are proposed as a broadcast delivery technique.

CBS is a technique whose specifications are defined in 3GPP (3rd Generation Partnership Project). In CBS, a message such as a text is broadcasted to mobile terminals in a specified area (cell) (for example, Non-Patent Document 1).

As similar to CBS, MBMS is a technique whose specifications are defined in 3GPP. In MBMS, not only a text but also multimedia data such as a moving image are broadcasted

### (for example, Non-Patent Document 2)

In addition, a technique is proposed which allows an incoming operation of a mobile terminal to be specified when disaster information is delivered by use of CBS or MBMS. In this technique, when a disaster such as earthquake occurs, a message instructing the mobile terminal to output an alarm sound or to display contents on a display is delivered to the mobile terminal by use of MBMS (for example, Patent Document 1).
Non-Patent Document 1: 3GPP TS23.401
Non-Patent Document 2: 3GPP TS23.246
Patent Document 1: JP-A 2005-309993

### DISCLOSURE OF THE INVENTION

In a mobile communication network, however, the quality of a signal received by a mobile terminal degrades significantly in a case where the radio environment between the mobile terminal and a base station is poor. In such case, it is expected that the mobile terminal cannot properly decode a message (disaster information) delivered by use of CBS or MBMS.

In other words, the user of the mobile terminal may not be notified of occurrence of a disaster even if the disaster information is broadcasted from the base station.
US 2006/040639 A1 relates to an alert system and personal apparatus. The EAS (Emergency Alert System) protocol and message format are specified. "ORG" is the originator code and indicates the organisation which initiated the activation of the EAS. "EEE" is the event code which indicates the nature of the EAS activation. At the mobile terminal, the base band processor decodes cellular broadcast messages and activates the appropriate outputs for user.

The present invention has been made to solve the problem as described above, and an object of the present invention is to provide an emergency information delivery system, an emergency information delivery method, a transmission server, and a mobile terminal, in which the occurrence of emergency such as a disaster can be notified to the user of the mobile terminal more reliably.

An emergency information delivery system according to the first feature is configured by a transmission server and a mobile terminal, and a broadcast message is broadcasted to the mobile terminal by use of a radio network. The transmission server includes a first generator (emergency information generator 11) configured to generate an emergency information indicating at least occurrence of emergency, a second generator (incoming operation identifier generator 12) configured to generate an incoming operation identifier indicating at least an incoming operation for the broadcast message and a transmitter (communication unit 14) configured to transmit the broadcast message including the emergency information and the incoming operation identifier. The mobile terminal includes an incoming unit (communication unit 41) configured to receive the broadcast message including the emergency information and the incoming operation identifier and an incoming processor (message processor 45) configured to execute the incoming operation for the broadcast message in accordance with the incoming operation indicated by the incoming operation identifier. The broadcast message in the radio network has a format including at least a message field storing a content of the message and a specific type field storing a bit indicating a specific message type. The emergency information is included in the message field and the incoming operation identifier is included in the specific type field.

According to the feature, the broadcast message has a format in which the emergency information and the incoming operation identifier are included in respective fields different from each other. Accordingly, even in a case where the mobile terminal cannot decode the emergency information due to poor radio environment, it enables notifying the user of where trouble has occurred by the incoming operation according to the incoming operation identifier. In addition, without causing the mobile terminal to perform analysis on the emergency information, it enables notifying the user of where trouble has occurred depending on whether the specific type field includes the incoming operation identifier. In other words, the occurrence of emergency such as a disaster can be notified to the user of the mobile terminal more reliably.

In the first feature, the mobile terminal further includes a storage unit (storage unit 42) configured to store the incoming operation for the broadcast message and a determination unit (controller 43) configured to determine whether to comply with the incoming operation indicated by the incoming operation identifier. The incoming processor executes the incoming operation for the broadcast message in accordance with the incoming operation stored in the storage unit when it is determined not to comply with the incoming operation indicated by the incoming operation identifier.

In an emergency information delivery method according to the second feature, a broadcast message is broadcasted to the mobile terminal by use of a radio network in an emergency information delivery system configured by a transmission server and a mobile terminal. The emergency information delivery method includes the steps of causing the transmission server to generate emergency information indicating at least occurrence of emergency, causing the transmission server to generate an incoming operation identifier indicating at least an incoming operation for the broadcast message, causing the transmission server to transmit the broadcast message including the emergency information and the incoming operation identifier, and causing the mobile terminal to execute the incoming operation for the broadcast message in accordance with the incoming operation indicated by the incoming operation identifier. The broadcast message in the radio network has a format including at least a message field storing a content of the message and a specific type field storing a bit indicating a specific message type. The emergency information is included in the message field and the incoming operation identifier is included in the specific type field.

A transmission server according to the third feature transmits a broadcast message in an emergency information delivery system in which the broadcast message is broadcasted to the mobile terminal by use of a radio network. The transmission server includes a first generator configured to generate emergency information indicating at least occurrence of emergency, a second generator configured to generate an incoming operation identifier indicating at least an incoming operation for the broadcast message and a transmitter configured to transmit the broadcast message including at least the emergency information and the incoming operation identifier. The broadcast message in the radio network has a format including at least a message field storing a content of the message and a specific type field storing a bit indicating a specific message type. The emergency information is included in the message field and the incoming operation identifier is included in the specific type field.

A mobile terminal according to the fourth feature receives a broadcast message in an emergency information delivery system in which the broadcast message is broadcasted by use of a radio network. The mobile terminal includes an incoming unit configured to receive the broadcast message including emergency information indicating at least occurrence of emergency and an incoming operation identifier indicating at least an incoming operation for the broadcast message and an incoming processor configured to execute the incoming operation for the broadcast message in accordance with the incoming operation indicated by the incoming operation identifier. The broadcast message in the radio network has a format including at least a message field storing a content of the message and a specific type field storing a bit indicating a specific message type. The emergency information is included in the message field and the incoming operation identifier is included in the specific type field.

According to the present invention, it is possible to provide an emergency information delivery system, an emergency information delivery method, transmission server and mobile terminal, in which the occurrence of emergency such as a disaster can be notified to the user of the mobile terminal more reliably.

### BRIEF DESCRIPTION OF THE DRAWINGS

[Fig. 1] Fig. 1 is a view showing an emergency information delivery system according to a first embodiment.
[Fig. 2] Fig. 2 is a block diagram showing a transmission server 10 according to the first embodiment.
[Fig. 3] Fig. 3 is a block diagram showing a relay apparatus 20 according to the first embodiment.
[Fig. 4] Fig. 4 is a view showing an example of a format of a broadcast message according to the first embodiment.
[Fig. 5] Fig. 5 is a block diagram showing a mobile terminal 40 according to the first embodiment.
[Fig. 6] Fig. 6 is a flowchart showing an operation of the transmission server 10 according to the first embodiment.
[Fig. 7] Fig. 7 is a flowchart showing an operation of the relay apparatus 20 according to the first embodiment.
[Fig. 8] Fig. 8 is a flowchart showing an operation of the mobile terminal 40 according to the first embodiment.

### BEST MODES FOR CARRYING OUT THE INVENTION

Hereinafter, an emergency information delivery system according to an embodiment of the present invention will be described with reference to the drawings. In the following descriptions of the drawings, the same or similar reference numerals are given to the same or similar components.

However, it should be noted that the drawings are schematic, and that ratios of some measurements to others, and the like, are not to scale. Therefore, specific measurements should be judged in consideration of the following description. Additionally, it goes without saying that the respective drawings include parts whose relation and ratio vary also between any ones of the drawings.

### [First Embodiment]

### (Configuration of Emergency Information Delivery System)

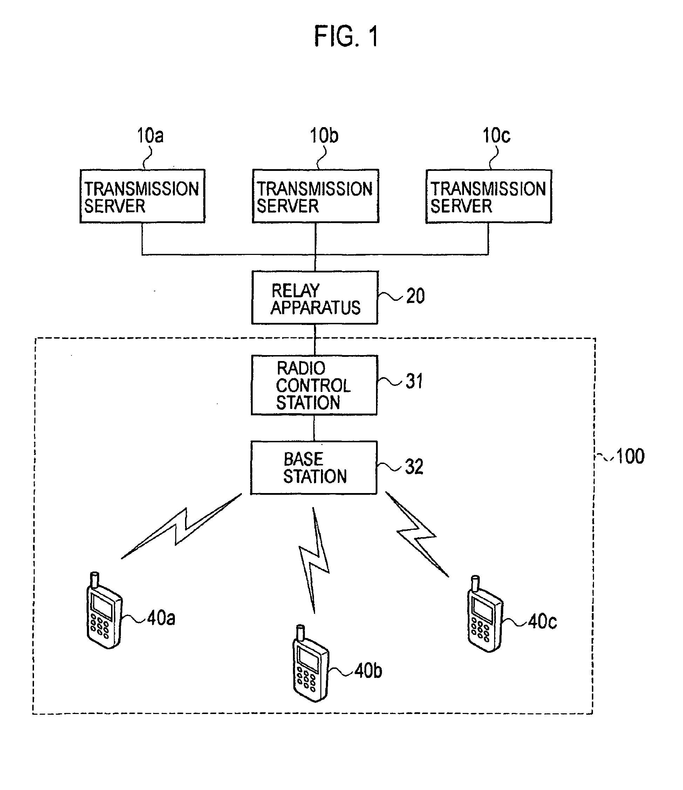

The configuration of an emergency information delivery system according to a first embodiment will be described below with reference to the drawings. Fig. 1 is a view showing the emergency information delivery system according to the first embodiment.

As shown in Fig. 1, the emergency information delivery system includes transmission servers (delivery servers 10a to 10c), a relay apparatus 20, a radio control station 31, a base station 32, and mobile terminals (mobile terminals 40a to 40c).

Note that, since the delivery servers 10a to 10c all have the same configuration, these are referred to as the transmission server 10. Similarly, since the mobile terminals 40a to 40c all have the same configuration, these are referred to as the mobile terminal 40.

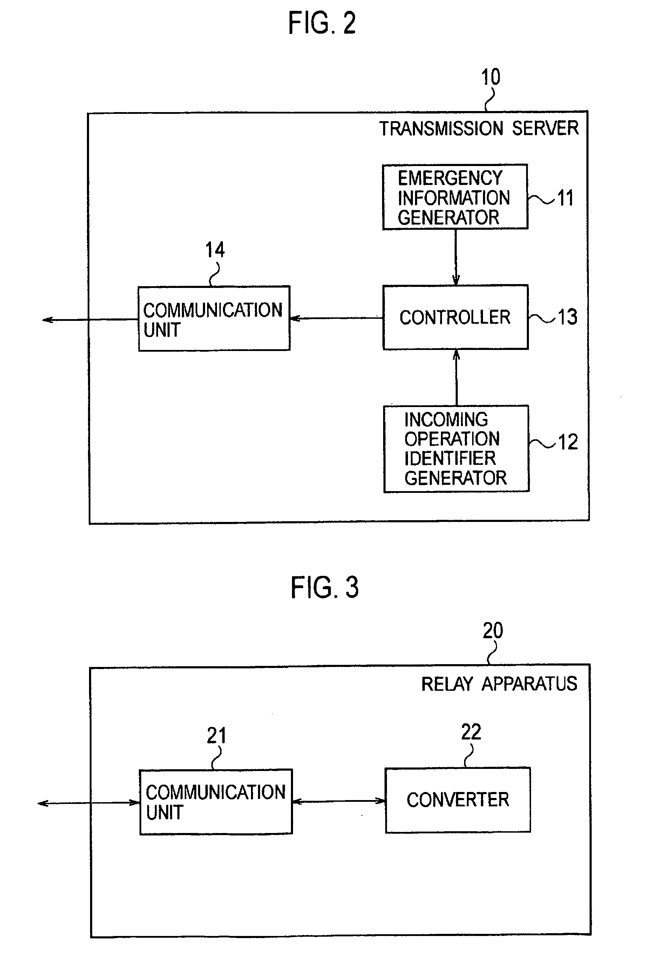

The transmission server 10 is for example a server for delivering a broadcast message. Specifically, when an emergency such as a disaster occurs, the transmission server 10 transmits a broadcast message including emergency information which indicates at least the occurrence of emergency. The transmission server 10 will be described in detail later (see Fig. 2).

When CBS (Cell Broadcast Service) is employed as the broadcast delivery technique, the transmission server 10 functions as a CBE (Cell Broadcast Entity).

The relay apparatus 20 performs conversion of the broadcast message received from the transmission server 10. - Specifically, the relay apparatus 20 converts the broadcast message (before conversion) received from the transmission server 10 to a format suitable for broadcast delivery using a radio network, and thus obtains a broadcast message (after conversion). Next, the relay apparatus 20 transmits the broadcast message (after conversion) to the radio control station 31. The relay apparatus 20 will be described in detail later (see Fig. 3).

When CBS is employed as the broadcast delivery technique, the relay apparatus 20 functions as a CBC (Cell Broadcast Center). In such case, the relay apparatus 20 converts the broadcast message into a format suitable for SABP (Service Area Broadcast Protocol). Note that, SABP is a protocol used between the relay apparatus 20 and the radio control station 31.

The radio control station 31 manages multiple base stations 32, and performs the allocation of a radio resource to the mobile terminal 40, and other tasks. The radio control station 31 transmits the broadcast message received from the relay apparatus 20 to the base stations 32.

Each of the base stations 32 manages a single or multiple cells, and performs radio communication with the mobile terminal 40 in the cell. Specifically, the base station 32 receives the broadcast message from the radio control station 31. Then, the base station 32 performs broadcast delivery of the broadcast message to the mobile terminal 40 in the cell by use of the radio network.

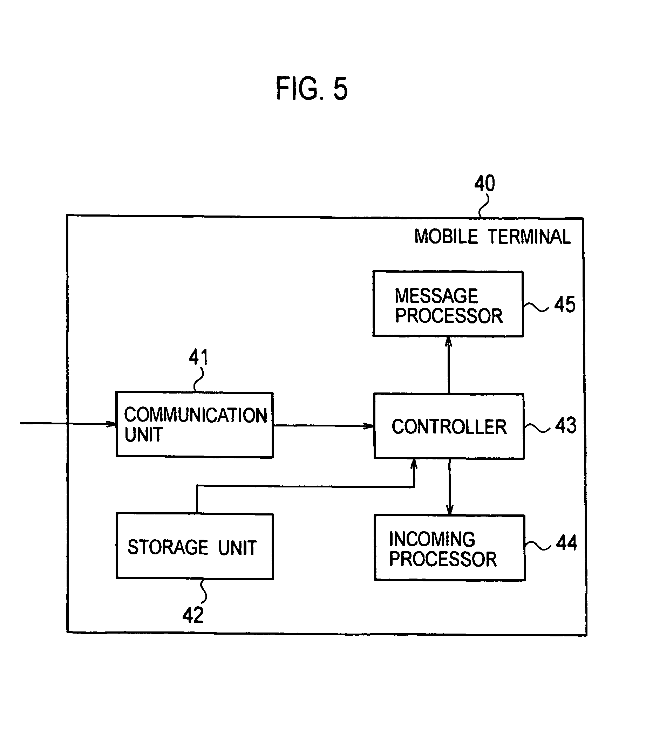

The mobile terminal 40 is for example a mobile phone for performing radio communication with the base station 32. Specifically, the broadcast message from the base station 32 arrives at the mobile terminal 40. Then, the mobile terminal 40 executes an incoming operation for the broadcast message, and displays the emergency information included in the broadcast message. The mobile terminal 40 will be described in detail later (see Fig. 5).

When CBS is employed as the broadcast delivery technique, the mobile terminal 40 functions as a MT (Mobile Terminal).

It should be noted here that the radio control station 31, the base station 32, and the mobile terminal 40 constitute a RAN (Radio Access NETWORK) 100.

### (Configuration of Transmission Server)

The configuration of the transmission server according to the first embodiment will be described below with reference to the drawing. Fig. 2 is a block diagram showing the transmission server 10 according to the first embodiment.

As shown in Fig. 2, the transmission server 10 includes generator 11, an incoming operation identifier generator 12, a controller 13, and a communication unit 14.

When an emergency such as a disaster occurs, the emergency information generator 11 generates emergency information indicating the occurrence of emergency. The emergency information may include not only the information indicating the occurrence of emergency but also information such as the content of the emergency, the significance of the emergency, and where the emergency has occurred.

The emergency information generator 11 generates the emergency information in accordance with an instruction inputted by an administrator or an automatic program. The emergency information may include only a text, or may include a text and an image.

The incoming operation identifier generator 12 generates an incoming operation identifier indicating at least the incoming operation of the mobile terminal 40. The following identifiers are given as examples of the incoming operation identifier.

### (1) Buzzer Ring Identifier

A buzzer ring identifier is an identifier indicating whether to notify of the incoming of the broadcast message by using a buzzer ring function provided in the mobile terminal 40.

### (2) Light-on Identifier

A light-on identifier is an identifier indicating whether to notify of the incoming of the broadcast message by turning on a light (such as LED) provided in the mobile terminal 40.

### (3) Terminal Vibration Identifier

A terminal vibration identifier is an identifier indicating whether to notify of the incoming of the broadcast message by using a vibration function provided in the mobile terminal 40.

### (4) Pop-up display Identifier

A pop-up display identifier is an identifier indicating whether to display a pop-up of the emergency information included in the broadcast message on a display provided in the mobile terminal 40.

### (5) Radio Reception Identifier

A radio reception identifier is an identifier indicating whether to activate a radio reception function provided in the mobile terminal 40. Here, a channel for broadcasting disaster information and the like is preferably set as a channel to be received upon the activation of the radio reception function.

### (6) TV Reception Identifier

A TV reception identifier is an identifier indicating whether to activate a TV reception function (one segment reception function) provided in the mobile terminal 40. Here, a channel for broadcasting disaster information and the like is preferably set as a channel to be received upon the activation of the TV reception function.

### (7) Outgoing Call Identifier

An outgoing call identifier is an identifier indicating whether to automatically start an outgoing call to an emergency contact number. Here, the emergency contact number is preferably set in advance.

### (8) Location Information Record Identifier

A location information record identifier is an identifier indicating whether to record the location of the mobile terminal 40 in a server or the like. Here, the location of the mobile terminal 40 can be identified by using a GPS function provided in the mobile terminal 40, a broadcast signal received from the base station 32, and the like.

### (9) Power Save Identifier

A power save identifier is an identifier indicating whether to start the power save mode provided in the mobile terminal 40.

The controller 13 controls the blocks provided in the transmission server 10. For example, the controller 13 instructs the communication unit 14 to transmit the broadcast message including the emergency information and the incoming operation identifier.

The communication unit 14 transmits the broadcast message including the emergency information and the incoming operation identifier to the relay apparatus 20 in accordance with the instruction from the controller 13.

### (Configuration of Relay apparatus)

The relay apparatus according to the first embodiment will be described below while referring to the drawing. Fig. 3 is a block diagram showing the relay apparatus 20 according to the first embodiment.

As shown in Fig. 3, the relay apparatus 20 includes a communication unit 21 and a converter 22.

The communication unit 21 receives the broadcast message (before conversion) including the emergency information and the incoming operation identifier from the transmission server 10. The communication unit 21 transmits the broadcast message (after conversion) including the emergency information and the incoming operation identifier to the radio control station 31.

The converter 22 converts the broadcast message (before conversion) to a format suitable for broadcast delivery using a radio network, and thus obtains the broadcast message (after conversion). The broadcast message (after conversion) has a format including at least a message field storing the content of the message and a specific type field storing bits indicating a specific message type.

Note that the format of the broadcast message (after conversion) is a format used in the RAN 100. In other words, the format of the broadcast message (after conversion) is a format used on the radio network between the base station 32 and the mobile terminal 40.

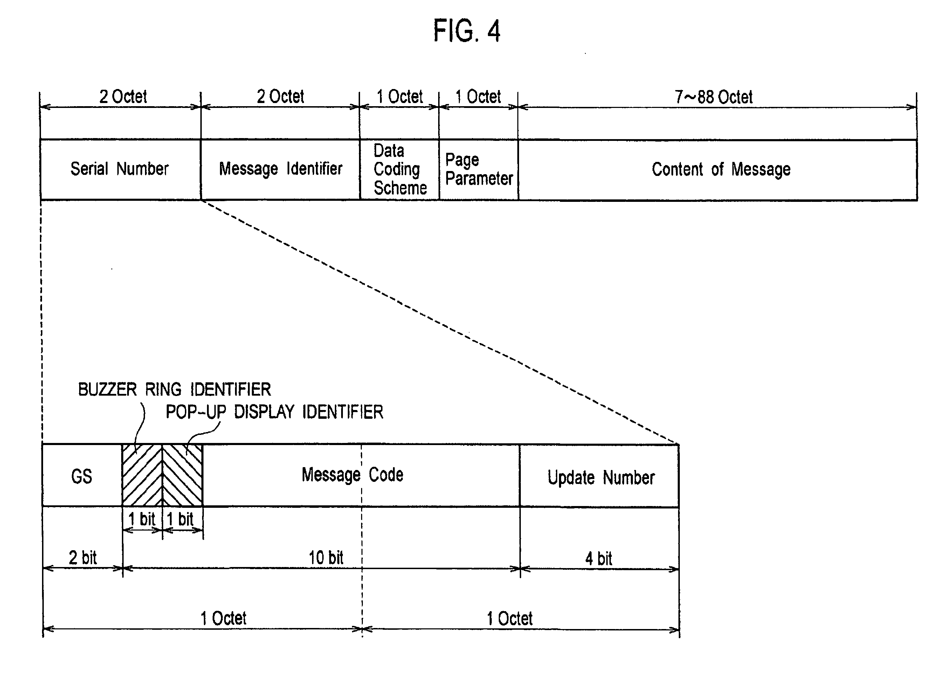

For example, in a case where the relay apparatus 20 functions as a CBC, the broadcast message (after conversion) has a format shown in Fig. 4.

As Fig. 4 shows, the broadcast message (CBS message) on the radio network includes "Serial Number," "Message Identifier," "Data Coding Scheme," "Page Parameter, " and "Content of Message" (3GPP TS.23.041 V7.0.09.4 "Message Format on the Radio Network-ME/UE Interface").

"Serial Number" is a field storing bits indicating the specific broadcast message (CBS message). The bit length of "Serial Number" is two octets.

"Serial Number" includes "Geographical Scope (GS)," "Message Code," and "Update Number."

"Geographical Scope" is a bit string indicating a geographical area where the broadcast message (CBS message) is to be delivered. The area indicated by "Geographical Scope" includes only a certain cell, all of PLMN (Public Land Mobile Network), only cells corresponding to a certain type of communication system (for example, GSM and UMTS), and the like.

"Message Code" is a bit string for identifying the same type of broadcast messages (CBS messages) transmitted from the same transmission server. Note that "Message Code" includes the incoming operation identifier described above. For example, as shown in Fig. 4, "Message Code" includes a field in which bits corresponding to the buzzer ring identifier and the pop-up display identifier are to be set.

When "1" is set in the buzzer ring identifier, the incoming of the broadcast message is notified to a user by using the buzzer ring function. On the other hand, when "0" is set in the buzzer ring identifier, the buzzer ring function is not used specifically.

Similarly, when "1" is set in the pop-up display identifier, the emergency information included in the broadcast message is displayed in the pop-up. On the other hand, when "0" is set in the pop-up display identifier, the pop-up is not displayed specifically.

"Update Number" is a bit string for identifying whether the broadcast message (CBS message) is an updated message. In other words, "Update Number" is a bit string for identifying whether the message is a new broadcast message (CBS message) or an old broadcast message (CBS message).

"Message Identifier" is a field storing identifiers indicating the type of the broadcast message and the transmission server. The field length of "Message Identifier" is two octets.

"Data Coding Scheme" is a field storing a bit string indicating a coding scheme of the broadcast message (CBS message). The mobile terminal 40 uses "Data Coding Scheme" to decode the broadcast message (CBS message). The field length of "Data Coding Scheme" is one octet.

"Page Parameter" is a field storing a bit string indicating a message length of the entire message to be transmitted by the transmission server 10. "Page Parameter" is a field storing a bit string indicating the sequence number of the broadcast message in the entire message to be transmitted by the transmission server 10. The field length of "Page Parameter" is one octet.

"Content of Message" is a field storing the contents of the broadcast message (CBS message). Note that "Content of Message" includes the emergency information. The field length of "Content of Message" is within a range of 7 to 88 octets.

### (Configuration of Mobile Terminal)

The mobile terminal according to the first embodiment will be described below with reference to the drawing. Fig. 5 is a block diagram showing the mobile terminal 40 according to the first embodiment.

As shown in Fig. 5, the mobile terminal 40 includes a communication unit 41, a storage unit 42, a controller 43, an incoming processor 44, and a message processor 45.

The communication unit 41 receives the broadcast message (after conversion) including the emergency information and the incoming operation identifier from the base station 32.

The storage unit 42 stores the incoming operation for the broadcast message. For example, the storage unit 42 stores a method (for example, a ringtone, vibration, and the like) of notifying the user of the incoming of the broadcast message. The incoming operation stored in the storage unit 42 is set by the user.

The controller 43 controls the blocks constituting the mobile terminal 40. For example, the controller 43 instructs the message processor 45 to perform processing for the emergency information.

Moreover, the controller 43 determines whether to comply with the incoming operation indicated by the incoming operation identifier (specified incoming operation). When determining to comply with the specified incoming operation, the controller 43 instructs the incoming processor 44 to execute the specified incoming operation. On the other hand, when determining not to comply with the specified incoming operation, the controller 43 instructs the incoming processor 44 to execute the incoming operation stored in the controller 43 (normal incoming operation).

The incoming processor 44 performs the incoming operation for the broadcast message in accordance with the instruction from the controller 43. When CBS is employed as the broadcast delivery technique, the incoming processor 44 identifies the type of the incoming operation identifier by referring to "Message Code" included in "Serial Number."

The message processor 45 displays the emergency information on the display in accordance with the instruction from the controller 43.

### (Operation of Transmission Server)

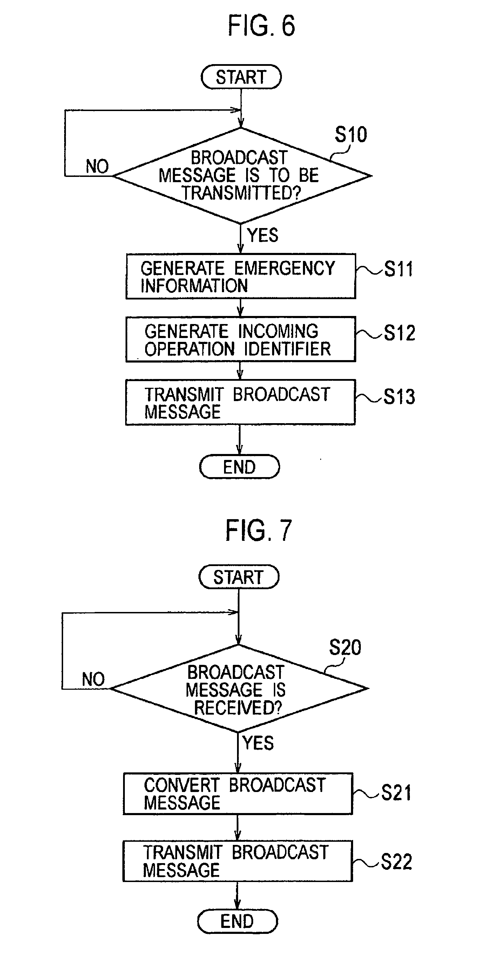

The operation of the transmission server according to the first embodiment will be described below with reference to the drawing. Fig. 6 is a flowchart showing the operation of the transmission server 10 according to the first embodiment.

As shown in Fig. 6, in step 10, the transmission server 10 determines whether to transmit a broadcast message including emergency information in accordance with the instruction inputted by the administrator or the automatic program. The transmission server 10 proceeds to processing of step 11 when transmitting the broadcast message.

In step 11, the transmission server 10 generates emergency information indicating the occurrence of emergency.

In step 12, the transmission server 10 generates an incoming operation identifier indicating at least the incoming operation of the mobile terminal 40.

In step 13, the transmission server 10 transmits the broadcast message including the emergency information and the incoming operation identifier to the relay apparatus 20. Naturally, the broadcast message includes no incoming operation identifier when no incoming operation of the mobile terminal 40 is specified.

### (Operation of Relay Apparatus)

The operation of the relay apparatus according to the first embodiment will be described below with reference to the drawing. Fig. 7 is a flowchart showing the operation of the relay apparatus 20 according to the first embodiment.

As shown in Fig. 7, in step 20, the relay apparatus 20 judges whether the broadcast message has been received from the transmission server 10. The relay apparatus 20 proceeds to processing of step 21 when having received the broadcast message.

In step 21, the relay apparatus 20 converts the broadcast message (before conversion) to a format suitable for broadcast delivery using the radio network, and thus obtains the broadcast message (after conversion).

In step 22, the relay apparatus 20 transmits the broadcast message (after conversion) to the radio control station 31.

### (Operation of Mobile Terminal)

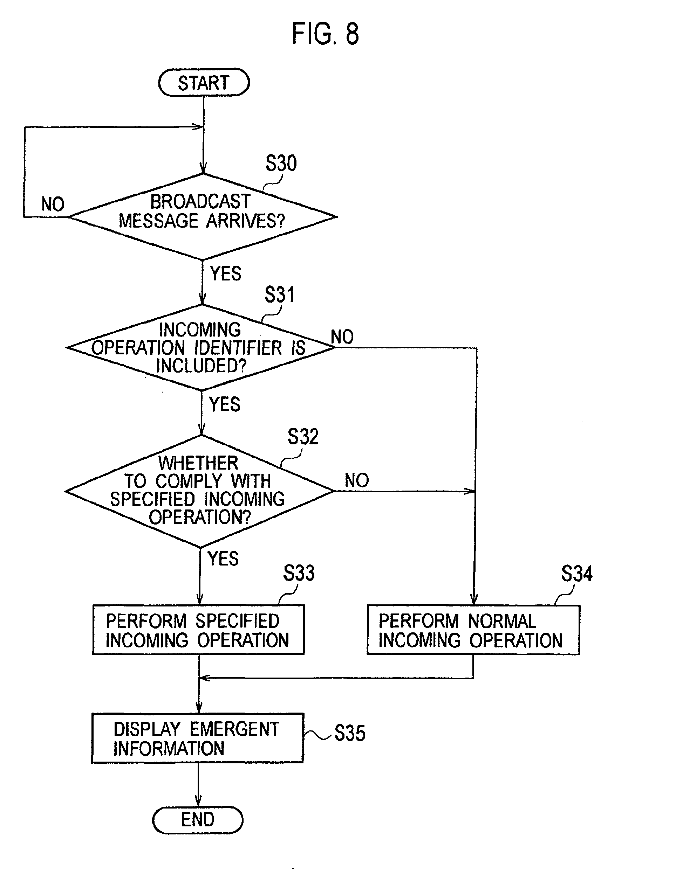

The operation of the mobile terminal according to the first embodiment will be described below with reference to the drawing. Fig. 8 is a flowchart showing the operation of the mobile terminal 40 according to the first embodiment.

As shown in Fig. 8, in step 30, the mobile terminal 40 judges whether the broadcast message (after conversion) has been received from the base station 32.

In step 31, the mobile terminal 40 judges whether the broadcast message includes the incoming operation identifier. When the incoming operation identifier is included, the mobile terminal 40 proceeds to processing of step 32. On the other hand, when no incoming operation identifier is included, the mobile terminal 40 proceeds to processing of step 34.

In step 32, the mobile terminal 40 determines whether to comply with the incoming operation indicated by the incoming operation identifier (specified incoming operation). When determining to comply with the specified incoming operation, the mobile terminal 40 proceeds to processing of step 33. On the other hand, when determining not to comply with the specified incoming operation, the mobile terminal 40 proceeds to processing of step 34.

In step 33, the mobile terminal 40 executes the incoming operation for the broadcast message in accordance with the incoming operation indicated by the incoming operation identifier (specified incoming operation).

In step 34, the mobile terminal 40 executes the incoming operation for the broadcast message in accordance with the incoming operation stored in the storage unit 42 (normal incoming operation).

In step 35, the mobile terminal 40 displays the emergency information included in the broadcast message on the display.

### (Operation and Effect)

According to the first embodiment, the broadcast message has a format in which the emergency information and the incoming operation identifier are included in respective fields different from each other. Accordingly, even in a case where the mobile terminal 40 cannot decode the emergency information due to poor radio environment, the first embodiment enables notifying the user of where trouble has occurred by the incoming operation according to the incoming operation identifier. In addition, without causing the mobile terminal 40 to perform analysis on the emergency information, the first embodiment enables notifying the user of where trouble has occurred depending on whether "Serial Number" ("Message Code") includes the incoming operation identifier. In other words, the occurrence of emergency such as a disaster can be notified to the user of the mobile terminal 40 more reliably.

### [Other Embodiments]

The present invention has been described according to the above embodiment. However, it should not be understood that the statements and drawings which form part of the disclosure limit the present invention. Various alternative embodiments, examples and operation techniques will be apparent to those skilled in the art from the disclosure.

For example, the storage unit 42 of the mobile terminal 40 may store permission information for each of the incoming operation identifiers, the permission information indicating whether to comply with the incoming operation indicated by the incoming operation identifier. Similarly, the storage unit 42 of the mobile terminal 40 may store permission information for each type (significance) of the emergency information, the permission information indicating whether to perform operation in accordance with the incoming operation identifier. Here, the permission information is preferably set by the user.

In such case, the controller 43 of the mobile terminal 40 determines whether to comply with the incoming operation indicated by the incoming operation identifier while referring to the permission information stored in the storage unit 42.

The transmission server 10 may include the functions of the relay apparatus 20. Naturally, in such case, conversion of the broadcast message is not required.

### INDUSTRIAL APPLICABILITY

As has been explained so far, according to the present invention, it is possible to provide an emergency information delivery system, an emergency information delivery method, transmission server and mobile terminal, in which the occurrence of emergency such as a disaster can be notified to the user of the mobile terminal more reliably in the emergency information delivery system for broadcasting a broadcast message including emergency information by using a radio network.

## Claims

1. An emergency information delivery method for broadcasting a broadcast message to a mobile terminal (40) by use of a radio network in an emergency information delivery system including a transmission server (10) and the mobile terminal (40), the emergency information delivery method comprising the steps of:
causing the transmission server (10) to generate emergency information indicating at least occurrence of emergency;
causing the transmission server (10) to generate an incoming operation identifier indicating at least an incoming operation for the broadcast message;
causing the transmission server (10) to transmit the broadcast message including the emergency information and the incoming operation identifier; and
causing the mobile terminal (40) to execute the incoming operation for the broadcast message in accordance with the incoming operation indicated by the incoming operation identifier, wherein
the broadcast message in the radio network has a format including at least a message field storing a content of the message and a specific type field storing a bit indicating a specific message type,
the emergency information is included in the message field, and
the incoming operation identifier is included in the specific type field.

2. A transmission server (10) transmitting a broadcast message in an emergency information delivery system in which the broadcast message is broadcasted to the mobile terminal (40) by use of a radio network, the transmission server comprising:
a first generator (11) configured to generate emergency information indicating at least occurrence of emergency;
a second generator (12) configured to generate an incoming operation identifier indicating at least an incoming operation for the broadcast message; and
a transmitter (14, 20) configured to transmit the broadcast message including at least the emergency information and the incoming operation identifier, wherein
the broadcast message in the radio network has a format including at least a message field storing a content of the message and a specific type field storing a bit indicating a specific message type,
the emergency information is included in the message field, and
the incoming operation identifier is included in the specific type field.

3. A mobile terminal (40) that receives a broadcast message in an emergency information delivery system in which the broadcast message is broadcasted by use of a radio network, the mobile terminal comprising:
an incoming unit (41) configured to receive the broadcast message including emergency information indicating at least occurrence of emergency and an incoming operation identifier indicating at least an incoming operation for the broadcast message; and
an incoming processor (44) configured to execute the incoming operation for the broadcast message in accordance with the incoming operation indicated by the incoming operation identifier, wherein
the broadcast message in the radio network has a format including at least a message field storing a content of the message and a specific type field storing a bit indicating a specific message type,
the emergency information is included in the message field, and
the incoming operation identifier is included in the specific type field.

4. An emergency information delivery system which includes a transmission server (10) and a mobile terminal (40), and in which a broadcast message is broadcasted to the mobile terminal by use of a radio network, wherein
the transmission server (40) is according to claim 2,
the mobile terminal (10) is according to claim 3,
the broadcast message in the radio network has a format including at least a message field storing a content of the message and a specific type field storing a bit indicating a specific message type,
the emergency information is included in the message field, and
the incoming operation identifier is included in the specific type field.

5. The emergency information delivery system according to claim 4, wherein
the mobile terminal (40) further includes:
a storage unit (42) configured to store the incoming operation for the broadcast message; and
a determination unit (43) configured to determine whether to comply with the incoming operation indicated by the incoming operation identifier, and
the incoming processor (44) executes the incoming operation for the broadcast message in accordance with the incoming operation stored in the storage unit (42) when it is determined not to comply with the incoming operation indicated by the incoming operation identifier.

## Patentansprüche

1. Notfallinformationen-Übermittlungsverfahren zum Senden einer Rundmeldung an ein mobiles Endgerät (40) unter Benutzung eines Funknetzes in einem Notfallinformationen-Übermittlungssystem, welches einen Übertragungs-Server (10) und das mobile Endgerät (40) umfasst, wobei das Notfallinformationen-Übermittlungsverfahren die folgenden Schritte umfasst:
Bewirken, dass der Übertragungs-Server (10) Notfallinformationen erzeugt, welche zumindest das Auftreten eines Notfalls anzeigen;
Bewirken, dass der Übertragungs-Server (10) eine Eingangsoperationskennung erzeugt, welche zumindest eine Eingangsoperation für die Rundmeldung anzeigt;
Bewirken, dass der Übertragungs-Server (10) die Rundmeldung sendet, welche die Notfallinformationen und die Eingangsoperationskennung umfasst; und
Bewirken, dass das mobile Endgerät (40) die Eingangsoperation für die Rundmeldung gemäß der Eingangsoperation ausführt, welche durch die Eingangsoperationskennung angezeigt wird, wobei
die Rundmeldung in dem Funknetz ein Format aufweist, welches zumindest ein Meldungsfeld, in dem ein Inhalt der Meldung gespeichert ist, und ein Feld für einen speziellen Typ umfasst, in dem ein Bit gespeichert ist, welches einen speziellen Meldungstyp anzeigt,
die Notfallinformationen in dem Meldungsfeld enthalten sind und
die Eingangsoperationskennung in dem Feld für den speziellen Typ enthalten ist.

2. Übertragungs-Server (10), welcher eine Rundmeldung in einem Notfallinformationen-Übermittlungssystem sendet, in welchem die Rundmeldung unter Benutzung eines Funknetzes an das mobile Endgerät (40) gesendet wird, wobei der Übertragungs-Server (10) das Folgende umfasst:
einen ersten Generator (11), welcher dafür konfiguriert ist, Notfallinformationen zu erzeugen, die zumindest das Auftreten eines Notfalls anzeigen;
einen zweiten Generator (12), welcher dafür konfiguriert ist, eine Eingangsoperationskennung zu erzeugen, welche zumindest eine Eingangsoperation für die Rundmeldung anzeigt; und
einen Sender (14, 20), welcher dafür konfiguriert ist, die Rundmeldung zu senden, welche zumindest die Notfallinformationen und die Eingangsoperationskennung umfasst, wobei
die Rundmeldung in dem Funknetz ein Format aufweist, welches zumindest ein Meldungsfeld, in dem ein Inhalt der Meldung gespeichert ist, und ein Feld für einen speziellen Typ umfasst, in dem ein Bit gespeichert ist, welches einen speziellen Meldungstyp anzeigt,
die Notfallinformationen in dem Meldungsfeld enthalten sind und
die Eingangsoperationskennung in dem Feld für den speziellen Typ enthalten ist.

3. Mobiles Endgerät (40), welches eine Rundmeldung in einem Notfallinformationen-Übermittlungssystem empfängt, in welchem die Rundmeldung unter Benutzung eines Funknetzes gesendet wird, wobei das mobile Endgerät das Folgende umfasst:
eine Eingangseinheit (41), welche dafür konfiguriert ist, die Rundmeldung zu empfangen, welche Notfallinformationen, die zumindest das Auftreten eines Notfalls anzeigen, und eine Eingangsoperationskennung umfasst, die zumindest eine Eingangsoperation für die Rundmeldung anzeigt; und
einen Eingangsprozessor (44), welcher dafür konfiguriert ist, die Eingangsoperation für die Rundmeldung gemäß der Eingangsoperation auszuführen, die durch die Eingangsoperationskennung angezeigt wird, wobei
die Rundmeldung in dem Funknetz ein Format aufweist, welches zumindest ein Meldungsfeld, in dem ein Inhalt der Meldung gespeichert ist, und ein Feld für einen speziellen Typ umfasst, in dem ein Bit gespeichert ist, welches einen speziellen Meldungstyp anzeigt,
die Notfallinformationen in dem Meldungsfeld enthalten sind und
die Eingangsoperationskennung in dem Feld für den speziellen Typ enthalten ist.

4. Notfallinformationen-Übermittlungssystem, welches einen Übertragungs-Server (10) und ein mobiles Endgerät (40) umfasst und in welchem eine Rundmeldung unter Benutzung eines Funknetzes an das mobile Endgerät gesendet wird, wobei
der Übertragungs-Server (10) einer nach Anspruch 2 ist,
das mobile Endgerät (40) eines nach Anspruch 3 ist,
die Rundmeldung in dem Funknetz ein Format aufweist, welches zumindest ein Meldungsfeld, in dem ein Inhalt der Meldung gespeichert ist, und ein Feld für einen speziellen Typ umfasst, in dem ein Bit gespeichert ist, welches einen speziellen Meldungstyp anzeigt,
die Notfallinformationen in dem Meldungsfeld enthalten sind und
die Eingangsoperationskennung in dem Feld für den speziellen Typ enthalten ist.

5. Notfallinformationen-Übermittlungssystem nach Anspruch 4, wobei
das mobile Endgerät (40) ferner das Folgende umfasst:
eine Speichereinheit (42), welche dafür konfiguriert ist, die Eingangsoperation für die Rundmeldung zu speichern; und
eine Bestimmungseinheit (43), welche dafür konfiguriert ist zu bestimmen, ob der Eingangsoperation zu folgen ist, die durch die Eingangsoperationskennung angezeigt wird; und
der Eingangsprozessor (44) die Eingangsoperation für die Rundmeldung gemäß der Eingangsoperation ausführt, die in der Speichereinheit (42) gespeichert ist, wenn bestimmt wird, nicht der Eingangsoperation zu folgen, die durch die Eingangsoperationskennung angezeigt wird.

## Revendications

1. Procédé de distribution d'informations d'urgence pour diffuser un message de diffusion à un terminal mobile (40) au moyen d'un réseau radio dans un système de distribution d'informations d'urgence comportant un serveur de transmission (10) et le terminal mobile (40), le procédé de distribution d'informations d'urgence comprenant les étapes qui consistent à :
amener le serveur de transmission (10) à générer des informations d'urgence indiquant au moins l'occurrence d'une situation d'urgence ;
amener le serveur de transmission (10) à générer un identifiant d'opération entrante indiquant au moins une opération entrante pour le message de diffusion ;
amener le serveur de transmission (10) à émettre le message de diffusion comportant les informations d'urgence et l'identifiant d'opération entrante ; et
amener le terminal mobile (40) à exécuter l'opération entrante pour le message de diffusion selon l'opération entrante indiquée par l'identifiant d'opération entrante, où
le message de diffusion dans le réseau radio est un format comportant au moins un champ de message stockant un contenu du message et un champ de type spécifique stockant un bit indiquant un type de message spécifique,
les informations d'urgence sont comprises dans le champ de message, et
l'identifiant d'opération entrante est compris dans le champ de type spécifique.

2. Serveur de transmission (10) émettant un message de diffusion dans un système de distribution d'informations d'urgence où le message de diffusion est diffusé au terminal mobile (40) au moyen d'un réseau radio, le serveur de transmission comprenant :
un premier générateur (11) configuré pour générer des informations d'urgence indiquant au moins l'occurrence d'une situation d'urgence ;
un deuxième générateur (12) configuré pour générer un identifiant d'opération entrante indiquant au moins une opération entrante pour le message de diffusion ; et
un émetteur (14, 20) configuré pour émettre le message de diffusion comportant au moins les informations d'urgence et l'identifiant d'opération entrante, où
le message de diffusion dans le réseau radio a un format comportant au moins un champ de message stockant un contenu du message et un champ de type spécifique stockant un bit indiquant un type de message spécifique,
les informations d'urgence sont comprises dans le champ de message, et
l'identifiant d'opération entrante est compris dans le champ de type spécifique.

3. Terminal mobile (40) qui reçoit un message de diffusion dans un système de distribution d'informations d'urgence où le message de diffusion est diffusé au moyen d'un réseau radio, le terminal mobile comprenant :
une unité entrante (41) configurée pour recevoir le message de diffusion comportant des informations d'urgence indiquant au moins l'occurrence d'une situation d'urgence et un identifiant d'opération entrante indiquant au moins une opération entrante pour le message de diffusion ; et
un processeur entrant (44) configuré pour exécuter l'opération entrante pour le message de diffusion conformément à l'opération entrante indiquée par l'identifiant d'opération entrante, où
le message de diffusion dans le réseau radio a un format comportant au moins un champ de message stockant un contenu du message et un champ de type spécifique stockant un bit indiquant un type de message spécifique,
les informations d'urgence sont comprises dans le champ de message, et
l'identifiant d'opération entrante est inclus dans le champ de type spécifique.

4. Système de distribution d'informations d'urgence qui comporte un serveur de transmission (10) et un terminal mobile (40), et dans lequel un message est diffusion est diffusé au terminal mobile au moyen d'un réseau radio, où
le serveur de transmission (40) est selon la revendication 2,
le terminal mobile (10) est selon la revendication 3,
le message de diffusion dans le réseau radio a un format comportant au moins un champ de message stockant un contenu du message et un champ de type spécifique stockant un bit indiquant un type de message spécifique,
les informations d'urgence sont comprises dans le champ de message, et
l'identifiant d'opération entrante est inclus dans le champ de type spécifique.

5. Système de distribution d'informations d'urgence selon la revendication 4, dans lequel
le terminal mobile (40) comporte en outre :
une unité de stockage (42) configurée pour stocker l'opération entrante pour le message diffusion ; et
une unité de détermination (43) configurée pour déterminer s'il faut se conformer à l'opération entrante indiquée par l'identifiant d'opération entrante, et
le processeur d'entrée (44) exécute l'opération entrante pour le message diffusion conformément à l'opération entrante stockée dans l'unité de stockage (42) lorsqu'il est déterminé de ne pas se conformer à l'opération entrante indiquée par l'identifiant d'opération entrante.
